# EUROPEAN PATENT APPLICATION

(11) **EP 2 975 518 A1**
(43) Date of publication of application: **20.01.2016**
(21) Application number: 14765360.4
(22) Date of filing: 13.03.2014
(51) Int. Cl.: G06F 9/50, G06F 9/46

(54) **INFORMATION PROCESSING SYSTEM AND METHOD FOR RELOCATING APPLICATION**

(30) Priority: 15.03.2013 JP 2013053134
(71) Applicant: NEC Corporation, Tokyo 108-8001 (JP)
(72) Inventor: TORII Takashi, Tokyo 108-8001 (JP)
(74) Representative: Betten & Resch
(86) International application number: PCT/JP2014/056597
(87) International publication number: WO 2014/142217

(57) **Abstract**

An application owned by an information processing device of any of a plurality of bases connected to each other via a network and each having an information processing device for operating the application by a virtual machine unit is, including the virtual machine unit, relocated to another base. The migration of the virtual machine unit that executes the application is controlled, the information processing device of the base that is a relocation destination is determined, and a base-by-base and application-by-application backup generation is grasped for each application. As bases for backing up data required to execute the application, information processing devices of a plurality of bases are selected, and the data is moved to each of the information processing devices and stored.

## Description

### [Technical Field]

The present invention relates to an information processing system and a method for relocating an application.

### [Background Art]

In the field of information processing systems, recently, an application (software) that run on virtual machine (hereinafter, in some case, abbreviated as "VM") is relocated between sites. Furthermore, with innovation of VM technologies, VM themselves can also be migrated (in other words, program and data can be relocated or converted).

As a result, an application can be relocated to other servers while the VM that executes the application is still running (hereinafter, such a situation of migration of an application may be simply expressed as "relocation"). However, a destination, to which an application can be relocated as is, is restricted to sites in the same network. This is because the network addresses can be used as is therewithin.

However, the restriction relating to the relocation destination of the application has lately been resolved. In other words, with the development of network technologies, sites now can be controlled as if they belong to the same network even though the sites are physically separated to each other, between which different networks are interposed.

However, there is a problem that, when an application with frequent data access is relocated between physically separated sites, data access performance upon executing the application is deteriorated. Thus, such the relocation of the application between sites that are physically separated to each other is not realistic.

There have been known various techniques relating to such a background (for example, refer to PTLs 1 to 5).

For example, as a data restoration system, PTL 1 describes smoothly restoring data and enabling quick and appropriate resumption of an application program.

Specifically, a generation attaching unit is provided for attaching generation numbers to data structures of data in a database that is used by the application program. Further, a backup data producing unit is provided for, when taking a back-up, generating back-up data in which the generation number and data in the database are associated with each other and storing the data in an external storage medium. Further, a generation identifying unit is provided for, in restoration of data, comparing the generation number in the external storage medium and the generation number of the data structure relating to the database to be used by the application program to run after restoring data. Further, a data restoring unit is provided for converting the data structure of the data in the external storage medium in accordance with a difference between the generation numbers so as to be adapted to the application program to run.

Further, for example, PTL 2 describes minimizing a cost of service provision while accommodating a situation involving temporary storage of data.

Specifically, a storage case search unit is provided for accepting a data storage request from an input interface and searching a case which is used to store a data of being target to storage in a data center having a capacity not smaller than the size of the storage data. Using information of the size of the storage data included in the data storage request and a data center table, the storage case search unit performs the search.

Further, a storage cost calculation unit is provided for calculating a storage cost necessary for each case using to the data center table and the size of the storage data. Further, a default cost calculation unit is provided for calculating a default cost based on a data storage table. The default cost is a cost that is necessary for each of the cases when a storage level required is not achieved. Further, a case selection unit is provided for calculating a total cost of each of the cases, and storing the data in the data center that corresponds to the case of the lowest total cost or requesting the storage to the data center.

Further, for example, PTL 3 describes a method that determines a migration destination of a virtual machine and, particularly, controls migration in consideration of the characteristics of various applications.

Specifically, the method enables a user to define not only a migration policy to optimize a system as a whole but also a migration policy depending on an application. In other words, the method relocates an application to a different server in consideration of both policies while operating the virtual machine on which the application is run.

Further, for example, PTL 4 describes automatically locating one or more appropriate data centers that are able to run an application according to a current status of performance in order to enable migration of the application.

Specifically, a first data center refers to a migration request document that specifies network requirements, server requirements, and storage requirements for the application to be migrated. As such, the first data center ensures that a specified level of performance of an application is maintained subsequent to migration of the application.

On the other hand, a second data center that is a candidate for migration destination of the application receives the specified requirements and determines whether its hardware and software and other configurations satisfy the specified requirements by using performance indexes and other analyses. The determination result is sent back to the requesting data center. Then, the requesting data center decides whether carries out the migration.

Further, for example, PTL 5 describes a data center system that includes a first data center that is connected to an external device and configures an application system providing a data processing service to this external device and a second data center that has a configuration equivalent to the first data center.

More specifically, this data center system has components where application systems are communicably connected to each other. Then, this data center system selects a first component to be a candidate for being relocated to the second data center among components of the application system of the first data center. Then, the data center system sets connection degree for each the component. The connection degree is an index representing a necessary condition of a communication between components of the application system. Then, the data center system compares the connection degree set for the component of the relocation candidate with communication line information between the data centers being information of a communication state of a communication line between the first data center and the second data center. In case that, by the comparison, the connection degree is determined as superior than the communication line information between the data centers, the data center system determines the component necessary to be relocated to the second data center together with the first component and adds the determined component as the relocation candidate.

As such, according to the data center system, without knowing the detailed configuration, in the application system that are allocated in a plurality of data centers, the components of the application system can be relocated between the data centers while satisfying the requirements of performance that specific components in the application system should fulfill or the requirements that should be maintained between the components.

### [Citation List]

### [Patent Literature]

[PTL 1] Japanese Unexamined Patent Application Publication No. 2000-066939
[PTL 2] Publication of Japanese Patent No. 4141937
[PTL 3] Publication of Japanese Patent No. 5104588
[PTL 4] Publication of Japanese Patent No. 5137709
[PTL 5] Japanese Unexamined Patent Application Publication No. 2012-221049

### [Summary of Invention]

### [Technical Problem]

As described above, recent information processing systems can relocate applications run on VM between sites. However, in general, processing of transferring data, which is accessed during execution of an application, between sites requires a lot of operation time. As such, even when the application itself can be relocated, data that is accessed thereafter becomes accessed from a different site. So, the data is slow in access speed. Thus, to solve this problem, data is commonly relocated in advance between sites, as well as, synchronized between the sites.

However, in order to relocate data in advance between sites and synchronize the data between the sites, the sites, between which the application is relocated, should be determined. When the back-up is performed as a precaution for a system failure, the relocation destination site is always a back-up site. However, in a system where cloud computing sites are mutually linked, the relocation destination of an application is not fixedly restricted, yet, is determined from among a plurality of candidates.

Thus, in such a case, measures, such as relocating data between sites in advance, are not realistic. For such a reason, relocating an application with frequent data access between sites largely deteriorates the speed performance of data access thereafter for the application. Therefore, relocating an application was not realistic. This problem has not been resolved even by the techniques disclosed in the PTLs 1 to 5.

The objective of the present invention is to provide an information processing system and a method for relocating an application that solve the above problem.

### [Solution to Problem]

An information processing system includes:
information processing devices that operates an application on a virtual machine unit at a plurality of sites and are connected to one another over a network; and
a system management controller that controls to relocate the application in which the information processing device at one site has, to the information processing device at the other site together with the virtual machine unit. This system management controller includes:
   a migration controller that controls migration of the virtual machine unit executing the application;
   an allocation planning unit that determines the information processing device at a site to which the application is relocated; and
   a storage controller that recognizes, for each application, back-up generations different for each application and each site,
   wherein the information processing devices at the sites are selected as sites for backing up data necessary for executing the application from among the information processing devices at the plurality of sites, and
   data is relocated to the information processing devices at the selected sites and stored in the information processing devices at the sites.

A method for relocating an application, which is included in information processing devices that operate the application on a virtual machine unit at a plurality of sites and are connected to one another over a network, to the information processing device at the other site together with the virtual machine unit, the method includes:
determining the information processing device at a site to which the application is relocated;
recognizing, for each application, back-up generations different for each information processing device at a site and each application; and
selecting the information processing devices at sites as information processing devices at sites for backing up data necessary for executing the application from among the information processing devices at the plurality of sites, relocating the data to the information processing devices at the plurality of sites, and storing the data in the information processing devices at the sites.

It should be noted that the above summary of the present invention does not list all the features of the present invention. Further, sub-combinations of these feature groups may also be the present invention.

### [Advantageous Effects of Invention]

As is evident from the above description, the present invention can decrease operation costs for taking back-ups as compared with the method of regularly taking back-ups at a plurality of sites. In other words, in the present invention, selection of back-up sites of data, which becomes necessary with relocation of an application, is optimized, it also enables contraction of access time and reduction of traffics in a network between the sites.

### [Brief Description of Drawings]

Fig. 1 is a block diagram illustrating a configuration example of sites and in between the sites of an information processing system according to a first exemplary embodiment of the present invention; and
Fig. 2 is a block diagram illustrating a hardware configuration of the information processing system according to the first exemplary embodiment.

### [Description of Embodiments]

While the following will describe the present invention using an exemplary embodiment of the invention, the following exemplary embodiment does not limit the invention according to the scope of the claims, or all the combinations of the features described in the exemplary embodiment are not always necessary in a solution of the invention.

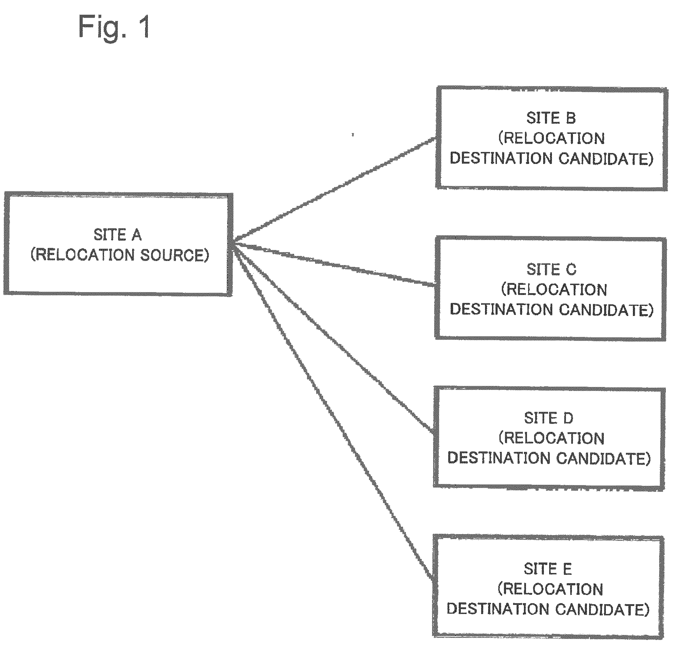

Fig. 1 is a block diagram illustrating a configuration example of sites and in between the sites of an information processing system according to a first exemplary embodiment of the present invention.

The feature of the present invention is, when selecting a site to which an application is to be relocated, first, to preferentially select sites that have taken back-ups of the data.

The feature is, next, to prepare a plurality of sites as sites for backing up data and for the application and select a site, to which the application is to be relocated, from among the plurality of sites. However, since, in general, an operation cost becomes high for backing up data simultaneously at a plurality of sites, as a way of taking a back-up, backing up of data is performed while reducing the cost of back-up by the method as described below, and, when relocating an application, a relocation destination site is selected in consideration of the past operation conditions.

The following will describe the way of taking a back-up in the present invention. The way of taking a back-up in the present invention is to differ with the back-up destination sites depending on back-up generations. For example, a method, such as taking a back-up of generation X in a site A and taking a back-up of generation X+1 in a site B, is employed.

Compared with a method of always taking back-ups in a plurality of fixed sites, the method of the first exemplary embodiment provides an effect of taking back-ups in a plurality of sites with a low cost. However, since back-up generations vary depending on sites, such an effect does not apply to the costs of synchronizing data that is necessary to execute an application to the latest condition and the costs vary for respective cases, in consideration of which, the relocation destination of the application is selected.

In Fig. 1, the information processing system of the exemplary embodiment has a site A as a relocation source and sites B-E as a plurality of relocation destination candidates. However, the configuration illustrated in Fig. 1 is only an example, thus, the present invention is not restricted, in general, to the relocation source site, the sites as relocation destination candidates, and the number of the sites thereof.

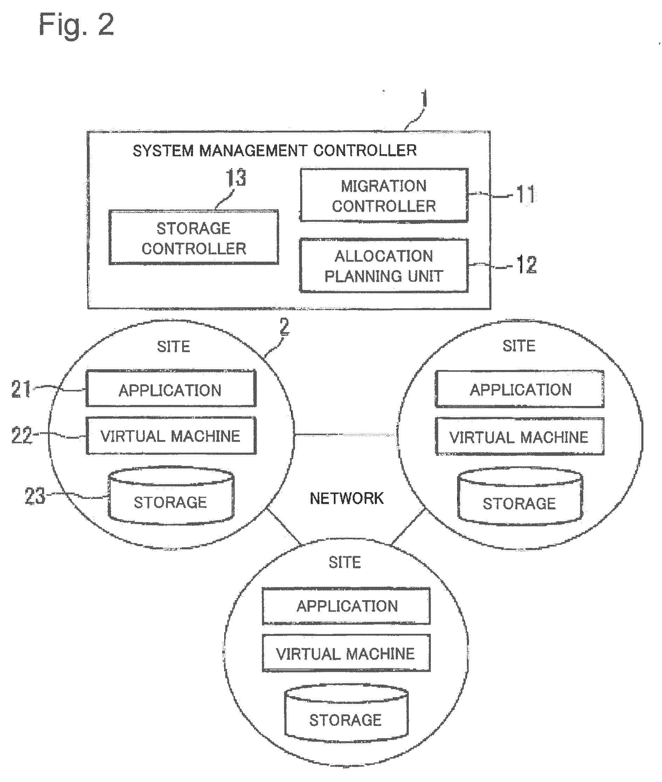

Fig. 2 is a block diagram illustrating a hardware configuration of the information processing system according to the first exemplary embodiment of the present invention. The information processing system according to the first exemplary embodiment of the present invention illustrated in Fig. 2 includes a system management controller 1 and a site 2. The site 2 is connected to other two sites via a network.

The system management controller 1 includes a migration controller 11 and an allocation planning unit 12. The migration controller 11 controls migration of a virtual machine to execute an application. The allocation planning unit 12 plans to allocate to which physical server at which site to migrate the virtual machine. Further, the system management controller 1 includes a storage controller 13 to control storage.

The site 2 includes an application 21, a virtual machine 22 (a virtual machine unit) and a storage 23. (The configurations of the other two sites are the same as the configuration of the site 2, thus, the description and assigning of numbers are omitted.)

With reference to Figs. 1 and 2, the following will describe the function of the information processing system according to the first exemplary embodiment of the present invention.

In the system management controller 1, the migration controller 11, the allocation planning unit 12, and the storage controller 13 cooperate to control relocation (migration) of an application that is executed by the virtual machine in the site 2 and the like and control relocation of data related in the relocated application. By the above control, the system management controller 1 minimizes the number of relocated data when the application is relocated between sites.

Specifically, first, since association between an application and a data area used by the application is necessary, an analysis related thereto is performed. When the application mounts the data area, the storage controller 13 stores the association between the application and the data area. In this matter, the association is enabled to obtain. Therefore, the analysis is employed in this embodiment.

Next, an information processing device (hereinafter, simply referred to as a "site") at a site for backing up data of the data area is set. This setting may be performed by a manual method, or the system management controller 1 may determine which site to take a back-up according to a preset rule for the system.

As the result, in the first exemplary embodiment, the system management controller 1 selects a plurality of sites as sites for taking a back-up for the data area. However, upon selection, the system management controller 1 changes back-up sites according to back-up generations. In other words, the system management controller 1 allocates back-up generations, such as, generation X to site B and generation X+1 to site C.

The information processing system of the first exemplary embodiment provides an effect of reducing an operation cost for taking a back-up, compared with the method of always taking back-ups at a plurality of sites.

In other words, optimizing the allocation of sites enables contraction of back-up time and reduction of traffics in a network between sites, whereby an operation cost for taking a back-up can be decreased.

The following will describe an information processing device according to a second exemplary embodiment of the present invention. The second exemplary embodiment relates to selection means that is used when the system management controller 1 selects a relocation destination site of an application.

As described above, the system management controller 1 retains a plurality of sites as sites for backing up data that is necessary for executing an application. Further, data back-up generations vary depending on the sites.

As such, when an application is relocated, updated data needs to be transmitted from the relocation source site so as to synchronize data that is necessary for executing the application.

Determining which site to relocate the application to is a role of the allocation planning unit 12. The allocation planning unit 12 asks the storage controller 13 to recognize, for each application, which back-up generation of the application resides at which site. Further, the allocation planning unit 12 acquires an estimate of a data update cost that is necessary for synchronizing data when relocating the application to the site, to which the application is provisionally determined to be relocated.

The allocation planning unit 12 plans which site to relocate the application to, based on the data. This relocation plan by the allocation planning unit 12 calculates a cost of relocation for each element and each site relating to the data, as will be described below, adds weight to the cost depending on each cost, and selects a site, with which the overall cost is minimized.

As elements relating to the above data, a network delay between sites, a cost for data synchronization, and required performance of the application with respect to data access are considered. As the network delay is smaller, the cost for accessing data from the different site becomes smaller. On the contrary, as the network delay is large, response time for accessing data from the different site becomes longer, thereby lowering the data access performance.

When the speed performance of accessing data is lower than the performance required by the application, data access over different sites cannot be performed. Thus, in such a case, data that is used by the application is synchronized before relocating the application, and data access is made to be completed within the site. To that end, the cost of synchronizing data is calculated in consideration of a data transferring amount that is necessary for synchronizing the back-up generation to the latest generation (in other words, how much the data update has been progressed).

When an application accesses data over different sites, fast speed performance is required for accessing data. Thus, in such a case, the back-up generation is preferably updated to the latest generation. On the other hand, when the application does not require fast speed performance for accessing data, access over arbitrary sites is permitted even when a network delay is included. Further, in such a case, as the processing of synchronizing data may be performed even after relocation of the application, older back-up generations may be permitted.

This application is based upon and claims the benefit of priority from Japanese patent application No. 2013-053134, filed on March 15, 2013, the disclosure of which is incorporated herein in its entirety by reference.

### [Industrial Applicability]

According to the invention, an operation cost for taking a back-up can be decreased, and selection of back-up sites of data that becomes necessary with relocation of an application can be optimized. In other words, access time can be contracted, as well as, traffics in a network between the sites can be reduced.

### [Reference Signs List]

- 1: System management controller
- 2: Site
- 11: Migration controller
- 12: Allocation planning unit
- 13: Storage controller
- 21: Application
- 22: Virtual machine
- 23: Storage

## Claims

1. An information processing system comprising:
information processing devices that operates an application on a virtual machine unit at a plurality of sites and are connected to one another over a network; and
a system management controller that controls to relocate the application in which the information processing device at one site has, to the information processing device at the other site together with the virtual machine unit, this system management controller including
a migration controller that controls migration of the virtual machine unit executing the application;
an allocation planning unit that determines the information processing device at a site to which the application is relocated; and
a storage controller that recognizes, for each application, back-up generations different for each application and each site,
wherein the information processing devices at the sites are selected as sites for backing up data necessary for executing the application from among the information processing devices at the plurality of sites, and
data is relocated to the information processing devices at the selected sites and stored in the information processing devices at the sites.

2. The information processing system according to Claim 1, wherein the allocation planning unit allocates the data necessary for executing the application to the information processing devices at selected sites from the plurality of sites for each of the back-up generations.

3. The information processing system according to Claim 1 or 2, wherein when relocating the application between the information processing devices at the sites, the allocation planning unit calculates, for data necessary for executing the application, an update cost necessary for synchronizing the data based on back-up generation information of the data stored in a relocation source site.

4. The information processing system according to any one of Claims 1 to 3, wherein the allocation planning unit calculates an update cost that is necessary for synchronizing the data for each application and each information processing device at the site, refers to information weighted by a predetermined weight to the obtained update cost by the calculation, and selects the information processing device at the site that minimizes an overall cost.

5. The information processing system according to any one of Claims 1 to 4, wherein the allocation planning unit relocates the application over the sites considering, for data necessary for executing the application, a network delay between the information processing devices at the sites, a cost for synchronizing the data, and required performance of the application with regard to data access.

6. The information processing system according to any one of Claims 1 to 5, wherein, when relocating the application between the information processing devices at the sites, the storage controller analyzes, for the application as a target of being relocated, association with a data area storing the data used by the application.

7. A method for relocating an application, which is included in information processing devices that operate the application on a virtual machine unit at a plurality of sites and are connected to one another over a network, to the information processing device at the other site together with the virtual machine unit, the method comprising:
determining the information processing device at a site to which the application is relocated;
recognizing, for each application, back-up generations different for each information processing device at a site and each application; and
selecting the information processing devices at sites as information processing devices at sites for backing up data necessary for executing the application from among the information processing devices at the plurality of sites, relocating the data to the information processing devices at the plurality of sites, and storing the data in the information processing devices at the sites.
